# EUROPÄISCHE PATENTSCHRIFT

(11) **EP 2 624 960 B1**
(45) Veröffentlichungstag und Bekanntmachung des Hinweises auf die Patenterteilung: **30.05.2018**
(21) Anmeldenummer: 11767166.9
(22) Anmeldetag: 28.09.2011
(51) Int. Cl.: B04C 3/06

(54) **SEPARATORVORRICHTUNG MIT EINER ZYKLONABSCHEIDEREINRICHTUNG**
SEPARATING DEVICE WITH A CYCLONIC SEPARATOR
DISPOSITIF DE SÉPARATION AVEC SÉPARATEUR CYCLONIQUE

(30) Priorität: 08.10.2010 DE 102010047760
(43) Veröffentlichungstag der Anmeldung: 14.08.2013
(73) Patentinhaber: Hydac Process Technology GmbH, 66538 Neunkirchen (DE)
(72) Erfinder: SCHLICHTER, Bernhard, 66123 Saarbrücken (DE); WNUK, Ralf, 66450 Bexbach/Kleinottweiler (DE); BÖTTCHER, Thomas, 66557 Illingen-Hüttigweiler (DE); WINTER, Christoph, 66121 Saarbrücken (DE); KIMMERLE, Klaus, 66424 Homburg (DE)
(74) Vertreter: Bartels und Partner, Patentanwälte
(86) Internationale Anmeldenummer: PCT/EP2011/004840
(87) Internationale Veröffentlichungsnummer: WO 2012/045405

(56) Entgegenhaltungen:
- WO-A1-03/045525
- US-A- 4 414 112
- US-A- 5 227 061
- US-A- 5 566 835

## Beschreibung

Die Erfindung betrifft eine Separatorvorrichtung zur Auftrennung eines mehrphasigen Mediums, mit einer Zyklonabscheidereinrichtung, die unter Bildung einer Drallströmung für das Medium eine zumindest teilweise Aufteilung von mindestens zwei Phasen dieses Mediums bewirkt, wobei mittels einer Sammeleinrichtung, die mindestens ein Entnahmerohr aufweist, die jeweilige Phase, die eine geringere Dichte gegenüber der jeweils anderen Phase aufweist, von dieser anderen Phase entmischt und aus der Separatorvorrichtung ausführbar ist, wobei die Sammeleinrichtung mindestens ein Entnahmerohr aufweist, das mit mindestens einer Sammelöffnung in der Zyklonabscheidereinrichtung in einer Zone mündet, in der die Phase geringerer Dichte durch die Drallströmung entmischt ist.

Separatorvorrichtungen sind Stand der Technik, siehe beispielsweise US-Patentschrift 6,129,775. Solche Vorrichtungen werden beispielsweise zur Entmischung von Medien eingesetzt, die in einer flüssigen Phase eine zweite flüssige Phase (etwa wässrige Phase/Kohlenwasserstoffphase) oder eine gasförmige Phase oder suspendierte Feststoffe enthalten, oder für Medien, die in gasförmiger Phase eine zweite gasförmige Phase und/oder eine flüssige Phase (etwa wässrige Phase) und/oder suspendierte Feststoffe enthalten. Die WO 03/045525 A1 beschreibt eine Zyklonabscheidevorrichtung mit einem Impeller in einem Abscheider-Gehäuse, der ein zu trennendes Stoffgemisch mit einer Flüssigkeit in Rotation versetzt. Das Stoffgemisch wird dadurch in zumindest zwei Phasen aufgeteilt, wobei mit Hilfe eines kurzen, glatten Entnahmerohres, das axial mittig in dem Gehäuse angeordnet ist, eine Phase geringerer Dichte abgeschieden wird.

Ausgehend vom Stand der Technik stellt sich die Erfindung die Aufgabe, eine Separatorvorrichtung zur Verfügung zu stellen, die sich bei der Anwendung zur Auftrennung von Medien mit Phasen unterschiedlicher Dichte durch ein besonders günstiges Betriebsverhalten auszeichnet.

Erfindungsgemäß ist diese Aufgabe durch eine Separatorvorrichtung gelöst, die die Merkmale des Patentanspruches 1 in seiner Gesamtheit aufweist.

Eine wesentliche Besonderheit der Erfindung besteht demgemäß darin, dass an einer Außenseite einer Wand des Entnahmerohres eine Konturierung vorgesehen ist, um in der entlang der Außenseite des Entnahmerohres verlaufenden Strömung eine koalisierende Wirkung zu erzeugen. Hierzu können in Längsrichtung oder in Schraublinien verlaufende Rillen oder Rippen vorgesehen sein.

Mittels der Sammeleinrichtung ist die jeweilige Phase, die eine geringere Dichte gegenüber der jeweils anderen Phase aufweist, von dieser anderen Phase entmischbar und aus der Separatorvorrichtung ausführbar. Durch die Entmischung der jeweils leichteren Phase aus einer flüssigen oder gasförmigen Phase lassen sich mit besonderem Vorteil beispielsweise aus wässriger Phase Kohlenwasserstoffanteile (Öl) oder gasförmige Bestandteile absondern oder Medien mit gasförmigen Phasen in Gase unterschiedlicher Dichte aufteilen.

Die Sammeleinrichtung für die Phase geringerer Dichte weist mindestens ein Entnahmerohr auf, das mit mindestens einer Sammelöffnung in der Zyklonabscheidereinrichtung in einer Zone mündet, in der die Phase geringerer Dichte durch die Drallströmung entmischt ist. Durch die Anordnung der Mündung eines Entnahmerohres der Sammeleinrichtung in einer Zone, in der die Entmischung der leichteren Phase mittels der sowohl zentrifugal wirksamen als auch axial verlaufenden Strömung bewirkt wird, entsteht innerhalb des Entnahmerohres eine Sogwirkung, so dass die Sammeleinrichtung, bei einfachster Bauweise eine Absaugvorrichtung für die leichtere Phase bildet, so dass für die Gesamtvorrichtung ein besonders einfacher Aufbau realisierbar ist.

Die Absaugung der leichteren Phase gestaltet sich besonders effizient, wenn am Ende des jeweiligen Entnahmerohres eine den Eintrittsquerschnitt der Sammelöffnung vergrößernde Erweiterung vorgesehen ist.

In besonders vorteilhafter Weise kann die Erweiterung durch einen konischen Einlauftrichter gebildet sein.

Die Anordnung kann hierbei so getroffen sein, dass der äußere Rand des Einlauftrichters über die Wand des Entnahmerohres radial überstehend ist. Alternativ kann die Anordnung jedoch auch so getroffen sein, dass der Einlauftrichter innerhalb der Wandstärke des Entnahmerohres gebildet ist, das in diesem Fall eine entsprechend größere ausreichende Wandstärke aufweist. Bei so in das Entnahmerohr integriertem Einlauftrichter ergibt sich der Vorteil, dass die an der Außenseite des Rohres nach oben verlaufende Strömung nicht durch über einen über die Rohraußenseite vorstehenden Trichter behindert werden kann.

Bei in die Rohrwand integriertem Trichter können in der Wand des Entnahmerohres Öffnungen gebildet sein, die ins Innere des Einlauftrichters führen, so dass zusätzliche Eintrittsquerschnitte für die abzusaugende leichtere Phase gebildet sind.

Hinsichtlich der koalisierenden Wirkung hat sich eine Konturierung durch auf der Rohraußenseite befindliche Borsten als besonders wirksam erwiesen, etwa durch eine die Konturierung bildende Rundbürste oder Spiralbürste. Alternativ kann auf der Rohraußenseite auch eine oleophobe Beschichtung vorgesehen sein.

Bei besonders vorteilhaften Ausführungsbeispielen weist die Zyklonabscheidereinrichtung ein eine Längsachse definierendes Zyklongehäuse mit einem Gehäuseeingang zum Einströmen des mehrphasigen Mediums in einen Zyklondom und einem sich entlang der Längsachse an den Dom anschließenden Raum auf, der die Sammeleinrichtung für die Phase geringerer Dichte sowie Gehäuseausgänge für andere Phasen aufweist, wobei sich das Entnahmerohr mittig entlang der Längsachse innerhalb des Raumes erstreckt.

Mit besonderem Vorteil kann die Anordnung hierbei so getroffen sein, dass sich vom Zyklondom ausgehend ein Strömungskörper entlang der Längsachse bis zum Endbereich des Entnahmerohres erstreckt. Hierbei kann das dem Entnahmerohr zugewandte Ende des Strömungskörpers die Form eines zylindrischen Körpers besitzen, etwa mit einem dem Durchmesser des Entnahmerohres gleichen oder ähnlichen Durchmesser. Ein derartiger zylindrischer Körper stabilisiert die Strömung der leichteren Phase.

Am Ende eines solchen zylindrischen Körpers kann ein Spaltsieb oder Drahtgewebe, das sich bis in die trichterartige Erweiterung des Entnahmerohres erstreckt, angeordnet sein, um für die leichtere Phase eine zusätzliche koalisierende Wirkung zu entfalten.

Nachstehend ist die Erfindung anhand von in der Zeichnung dargestellten Ausführungsbeispielen im Einzelnen erläutert. Es zeigen:
- Fig. 1: einen Längsschnitt einer Zyklonabscheidereinrichtung entsprechend einem Ausführungsbeispiel der erfindungsgemäßen Separatorvorrichtu ng;
- Fig. 2: einen gegenüber Fig. 1 vergrößert und abgebrochen dargestellten Teillängsschnitt lediglich des mittleren Längenabschnittes der Zyklonabscheidereinrichtung eines abgewandelten Ausführungsbeispiels;
- Fig. 3: einen weiter vergrößert gezeichneten Teillängsschnitt, der einen Zentralabschnitt des Zyklongehäuses eines dritten Ausführungsbeispiels zeigt;
- Fig. 4: einen der Fig. 2 ähnlichen Teillängsschnitt eines weiter abgewandelten Ausführungsbeispiels;
- Fig. 5: einen Teilquerschnitt, entsprechend der Schnittlinie V-V von Fig. 4 und
- Fig. 6: einen der Fig. 2 ähnlichen Teillängsschnitt eines noch weiter abgewandelten Ausführungsbeispiels.

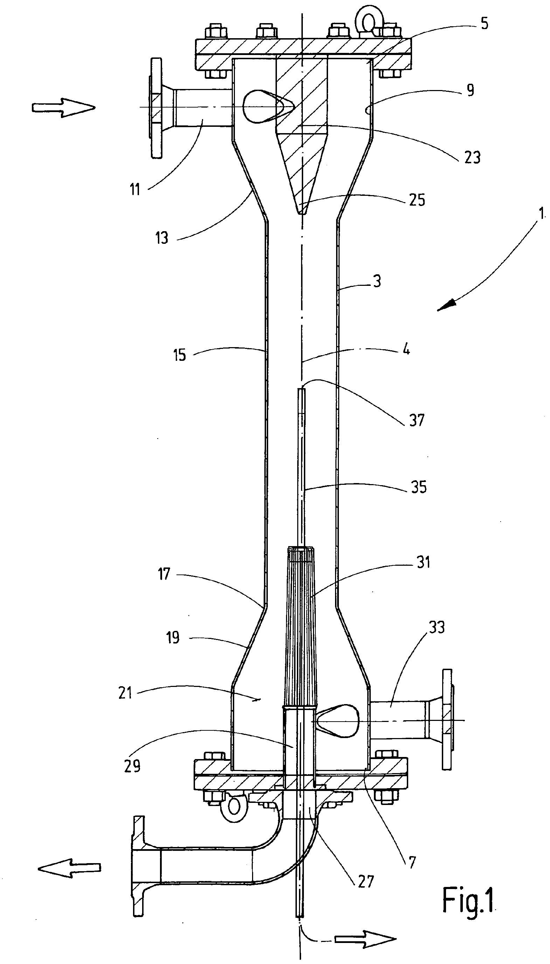

In Fig. 1 ist eine Zyklonabscheidereinrichtung als Ganzes mit 1 bezeichnet, deren Zyklongehäuse 3, bezüglich einer in Fig.1 vertikal verlaufenden Längsachse 4, eine langgestreckte Gestalt besitzt. Das am oberen Ende 5 und am unteren Ende 7 geschlossene Zyklongehäuse 3 bildet an das obere Ende 5 anschließend einen Zyklondom 9, in dessen trommelartigen Innenraum über einen Gehäuseeingang 11 ein mehrphasiges Medium für die Phasentrennung einströmbar ist, wobei in der bei Zyklonabscheidern üblichen Weise der Gehäuseeingang 11 so angeordnet ist, dass das Medium bezüglich der Wand des Zyklondomes 9 tangential einströmt und daher eine Drallströmung gebildet wird. An den zylindrischen Zyklondom 9 schließt sich ein Konusteil 13 mit nach unten konvergierenden Wänden an, in dem sich die Drallströmung mit entsprechend der geometrischen Verhältnisse veränderter Strömungsgeschwindigkeit in einen gegenüber dem Zyklondom 9 verjüngten, langgestreckten zylindrischen Zwischenteil 15 fortsetzt, an dessen unteres Ende 17 sich wiederum ein Konusteil 19 mit nach unten konvergierenden Wänden anschließt, der in eine zylindrische Bodenkammer 21 übergeht, deren Durchmesser demjenigen des Zyklondomes 9 entspricht und die am unteren Ende 7 geschlossen ist. Es ist aber auch möglich, den Durchmesser des Zyklondomes 9 größer zu wählen.

Vom oberen Ende 5 her erstreckt sich, vom Zyklondom 9 ausgehend, ein Strömungskörper 23 in Form eines zur Längsachse koaxialen Rotationskörpers nach unten. Beim in Fig. 1 gezeigten Beispiel bildet der Strömungskörper 23 in seinem freien Endbereich einen Führungskörper 25 in Form eines innerhalb des Konusteils 13 verlaufenden Kegels, dessen Konizität so gewählt ist, dass die Übergangsstelle zwischen Konusteil 13 und Gehäuseteil 15 eine gewisse Querschnittsverengung besitzt, wodurch die Strömungsgeschwindigkeit der in den zylindrischen Teil 15 eintretenden Teilströmung bis zum Ende des Konus gleichmäßig beschleunigt wird und die Zentrifugalströmung gerichtet wird. Durch die zentrifugale Wirkung der axialen Strömung kommt es innerhalb des zylindrischen Gehäuseteils 15 zu einer Entmischung der jeweils "leichteren" Phase.

In der innerhalb des zylindrischen Gehäuseteils 15 gelegenen Zone der Entmischung der "leichteren" Phase befindet sich die Sammeleinrichtung für die Ausfuhr dieser Phase, worauf unten noch eingegangen wird. Für den Austritt der demgegenüber "schwereren" Phasen aus der Bodenkammer 21 befindet sich an deren Boden ein Gehäuseausgang 27 mit einem zur Achse 4 koaxialen, in die Bodenkammer 21 ragenden Rohrstutzen 29, von dessen Ende sich ein filterkerzenartiges, konisches Spaltrohrsieb-Filterelement 31 über den Konusteil 19 hinaus bis in den zylindrischen Gehäuseteil 15 erstreckt. Bei der von außen nach innen erfolgenden Durchströmung des Filterelementes 31 erfolgt die Trennung der Feststoffe aus verbliebener dichterer, flüssiger oder gasförmiger Phase, so dass aus dem Gehäuseausgang 27 feststofffreie Flüssigkeit oder feststofffreies Gas austritt. An der Außenseite des Filterelementes 31 angelagerte Feststoffe, die in die Bodenkammer 21 absinken oder abfallen, werden über einen weiteren Gehäuseausgang 33 diskontinuierlich abgesaugt. Wie aus Fig. 1 zu erkennen ist, bildet dieser Gehäuseausgang 33 einen zur Wand der Bodenkammer 21 tangential verlaufenden Austritt, ähnlich dem tangentialen Eintritt des Gehäuseeingangs 11 am oberen Ende 5, wobei jedoch der Austritt am Gehäuseausgang 33 hierzu gegenläufig ist. Anstelle eines Spaltrohrsieb-Filterelementes 31 kann auch ein Meshgewebe oder dergleichen treten.

Die Sammeleinrichtung für die entmischte, jeweils "leichtere" Phase weist ein Entnahmerohr 35 auf. Dieses verläuft von der Außenseite des Zyklongehäuses 3 her durch den Gehäuseausgang 27 der Bodenkammer 21 durch den Rohrstutzen 29 und den mit diesem in Fluidverbindung stehenden inneren Filterhohlraum des Filterelementes 31 hindurch mittig entlang der Längsachse 4 bis zum Zentralbereich des zylindrischen Gehäuseteils 15, wo sich die Zone der entmischten "leichteren" Phase befindet. Das offene Ende des Entnahmerohres 35 bildet somit die Sammelöffnung 37 für das Abströmen der entmischten Phase. Bei der anhand der Fig. 1 aufgezeigten Geometrie des Zyklongehäuses 3, wobei sich die Drallströmung im zylindrischen Gehäuseteil 15 axial nach unten bewegt, bis es zu einer Strömungsumkehr kommt und sich eine entlang der Außenseite des Entnahmerohres 35 aufsteigende Sekundärströmung ergibt, herrscht in der Entmischungszone, also im Gebiet der Sammelöffnung 37 des Entnahmerohres 35 und im Zentrum der Drallströmung, ein starker Unterdruck, wodurch im Entnahmerohr 35 eine starke Sogwirkung entsteht. Bei einer im Betrieb oberhalb der Sammelöffnung 37 im zylindrischen Gehäuseteil 15 nach unten gerichteten Axialgeschwindigkeit von etwa 0,1 bis 0,4 m/s und einer entlang des Entnahmerohres 35 aufsteigenden Sekundärströmung mit einer Axialgeschwindigkeit von etwa 1 m/s kann sich eine Strömungsgeschwindigkeit innerhalb des Entnahmerohres 35 nach unten im Bereich von etwa 10 m/s einstellen. Das Entnahmerohr 35 bildet somit eine wirksame Absaugeinrichtung für die leichtere Phase. Bei praktischen Ausführungsbeispielen kann hierbei der Innendurchmesser des Entnahmerohres 35 etwa 4 mm betragen, bei einem Innendurchmesser des zylindrischen Gehäuseteils 15 von etwa 65 mm. Die dahingehende aufsteigende Sekundärströmung ist vorzugsweise aus Bestandteilen der leichten Phase gebildet.

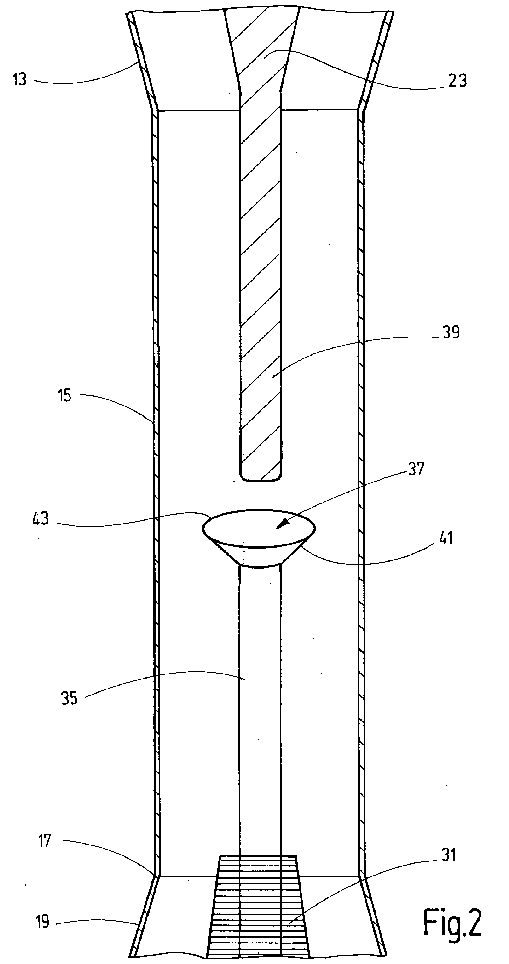

Die Fig. 2 zeigt ein demgegenüber abgewandeltes Ausführungsbeispiel, das sich gegenüber Fig. 1 insofern unterscheidet, als der Strömungskörper 23 anstelle eines kürzeren, endseitigen Kegelteils 25 einen langgestreckten, zylindrischen Strömungs-Leitkörper 39 aufweist. Außerdem ist am Ende des Entnahmerohres 35 eine den Eintrittsquerschnitt der Sammelöffnung 37 vergrößernde Erweiterung vorgesehen, die durch einen konischen Einlauftrichter 41 gebildet ist. Dieser ist bei dem Beispiel von Fig. 2 derart dimensioniert, dass der Durchmesser an dem über das Entnahmerohr 35 radial überstehenden äußeren Trichterrand 43 etwa das Sechsfache des Innendurchmessers des Entnahmerohres 35 beträgt. Diese Ausbildung gewährleistet eine besonders wirksame Absaugung der entmischten Phase geringerer Dichte.

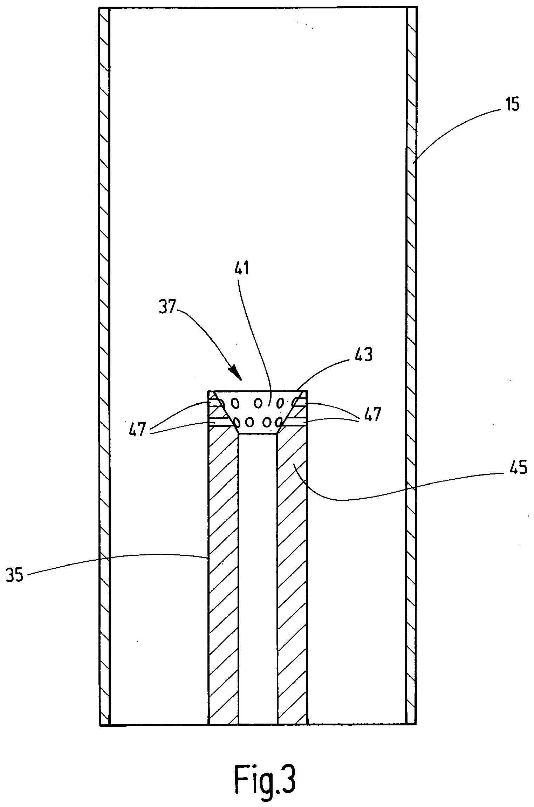

Die Fig. 3 verdeutlicht eine Variante der Gestaltung des Entnahmerohres 35 und dessen Einlauftrichter 41. Anstelle eines aufgesetzten Trichters mit über die Außenseite des Entnahmerohres 35 radial überstehendem Trichterrand ist der Trichter 41 im die Rohrwand 45 des in diesem Falle entsprechend dickwandig ausgeführten Entnahmerohres 35 integriert. Bei einem solchen Ausführungsbeispiel kommt zu dem Vorteil des trichterartig erweiterten Einlaufquerschnittes des Entnahmerohres 35 der weitere Vorteil hinzu, dass kein radial überstehender Trichterrand 43 vorhanden ist, der von der entlang der Außenseite des Entnahmerohres 35 nach oben verlaufenden Sekundärströmung umströmt werden muß. Wie in Fig. 3 gezeigt ist, sind in der Rohrwand 45 des Entnahmerohres 35 Radialbohrungen 47 gebildet, die ins Innere des Trichters 41 führen und somit den Eintrittsquerschnitt für die Strömung ins Innere des Entnahmerohres 35 weiter vergrößern. Der angesprochene Trichter 41 kann auch aus einem Drahtgewebe aufgebaut sein.

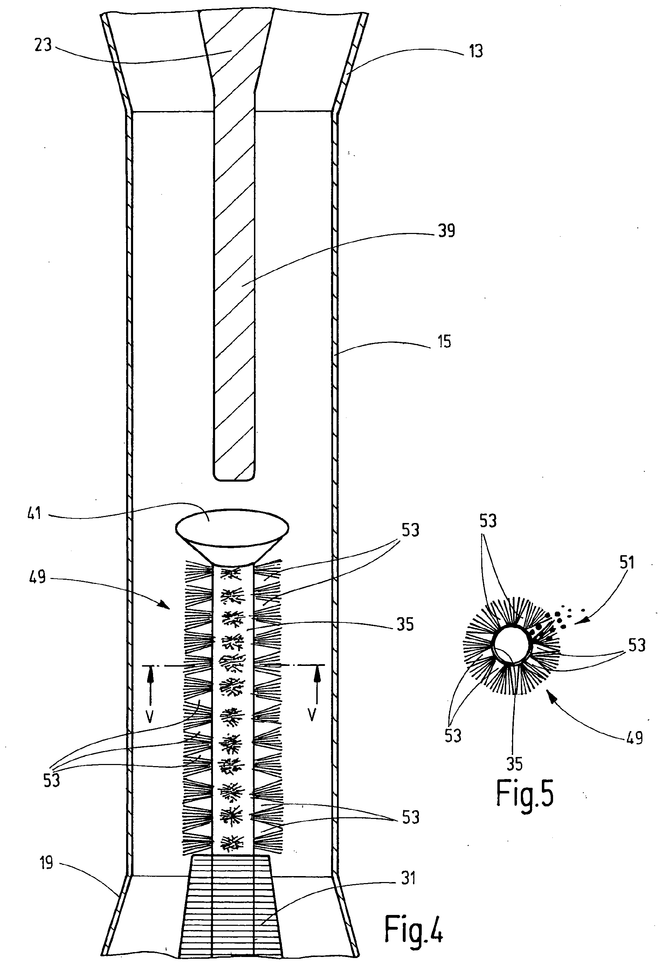

Die Außenseite des Entnahmerohres 35 läßt sich dafür ausnutzen, um an der daran aufsteigenden Sekundärströmung eine koalisierende Wirkung zu entfalten. Die Außenseite des Entnahmerohres 35 kann zu diesem Zweck mit einer Konturierung oder für eine Koalisierung beispielsweise von Öl, mit einer oleophoben Beschichtung versehen sein. Die Fig. 4 und 5 verdeutlichen ein Beispiel, bei dem zu diesem Zweck die Borsten eines das Entnahmerohr 35 umgebenden Bürstenkörpers 49 vorgesehen sind. Der Bürstenkörper 49 kann hierbei durch eine Bürstenwalze, durch einzelne Rundbürsten oder Spiralbürsten gebildet sein. Wie in Fig. 5 mit Öltröpfchen 51 angedeutet, erfolgt eine Koalisierung beim Durchdringen der Bürste von außen nach innen, wobei das Abströmen innerhalb der Zwickel 53 (nicht alle beziffert) erfolgen kann.

Es versteht sich, dass anstelle der Konturierung mittels Bürstenkörper 49 an der Außenseite des Entnahmerohres 35 auch Rillungen oder Rippen oder dergleichen vorgesehen sein könnten.

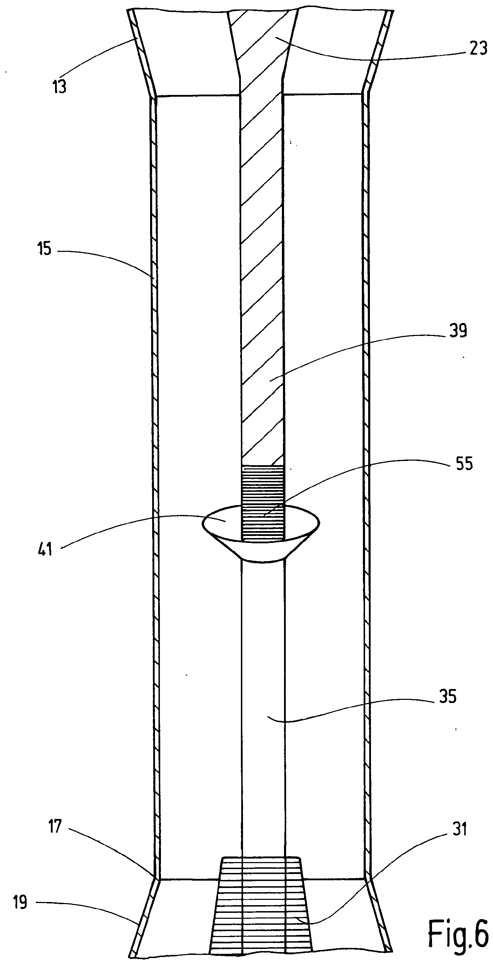

Die Fig. 6 zeigt ein weiteres Beispiel, das dem Beispiel von Fig. 2 ähnlich ist, abgesehen davon, dass sich an das freie Ende des Strömungs-Leitkörpers 39 ein Spaltsieb 55 anschließt, das sich bis ins Innere des Trichters 41 erstreckt. Bei einer Feinheit von beispielsweise 500 *µ*m bildet das Sieb 55 eine zusätzliche Koalisierungszone innerhalb der Absaugzone für die Phasen der jeweils geringeren Dichte. Sämtliche Strömungen innerhalb des Vorrichtungsgehäuses bewegen sich entlang einer Drallströmung, die in der gleichen Richtung weist. Insbesondere die leichtere Phase, die innerhalb des Vorrichtungsgehäuses entlang des Entnahmerohres 35 entgegen der sonstigen Drallströmung nach oben steigt, weist dieselbe Drallrichtung auf, so dass es keine Interferenz-Überlagerungen innerhalb der Fluidströmung kommt.

## Patentansprüche

1. Separatorvorrichtung zur Auftrennung eines mehrphasigen Mediums, mit einer Zyklonabscheidereinrichtung (1), die unter Bildung einer Drallströmung für das Medium eine zumindest teilweise Aufteilung von mindestens zwei Phasen dieses Mediums bewirkt, wobei mittels einer Sammeleinrichtung (35, 37) die jeweilige Phase, die eine geringere Dichte gegenüber der jeweils anderen Phase aufweist, von dieser anderen Phase entmischt und aus der Separatorvorrichtung ausführbar ist, wobei die Sammeleinrichtung mindestens ein Entnahmerohr (35) aufweist, das mit mindestens einer Sammelöffnung (37) in der Zyklonabscheidereinrichtung (1) in einer Zone mündet, in der die Phase geringerer Dichte durch die Drallströmung entmischt ist, **dadurch gekennzeichnet, dass** an einer Außenseite einer Wand (45) des Entnahmerohres (35) eine Konturierung (49) vorgesehen ist.

2. Separatorvorrichtung nach Anspruch 1, **dadurch gekennzeichnet, dass** am Ende des jeweiligen Entnahmerohres (35) eine den Eintrittsquerschnitt der Sammelöffnung (37) vergrößernde Erweiterung (41) vorgesehen ist.

3. Separatorvorrichtung nach einem der vorstehenden Ansprüche, **dadurch gekennzeichnet, dass** die Erweiterung durch einen konischen Einlauftrichter (41) gebildet ist.

4. Separatorvorrichtung nach einem der vorstehenden Ansprüche, **dadurch gekennzeichnet, dass** der äußere Rand (43) des Einlauftrichters (41) über die Wand (45) des Entnahmerohres (35) radial überstehend ist.

5. Separatorvorrichtung nach einem der vorstehenden Ansprüche, **dadurch gekennzeichnet, dass** der Einlauftrichter (41) innerhalb der Wandstärke des Entnahmerohres (35) gebildet ist.

6. Separatorvorrichtung nach einem der vorstehenden Ansprüche, **dadurch gekennzeichnet, dass** in der Wand (45) des Entnahmerohres (35) Öffnungen (47) gebildet sind, die ins Innere des Einlauftrichters (41) führen.

7. Separatorvorrichtung nach einem der vorstehenden Ansprüche, **dadurch gekennzeichnet, dass** die Konturierung durch eine Rundbürste (49) oder Spiralbürste gebildet ist.

8. Separatorvorrichtung nach einem der vorstehenden Ansprüche, **dadurch gekennzeichnet, dass** die Zyklonabscheidereinrichtung (1) ein eine Längsachse (4) definierendes Zyklongehäuse (3) mit einem Gehäuseeingang (11) zum Einströmen des mehrphasigen Mediums in einen Zyklondom (9) und einem sich entlang der Längsachse (4) an den Dom (9) anschließenden Raum aufweist, der die Sammeleinrichtung (35, 37) für die Phase geringerer Dichte sowie Gehäuseausgänge (27, 33) für andere Phasen aufweist, und dass sich das Entnahmerohr (35) mittig entlang der Längsachse (4) innerhalb des Raumes erstreckt.

9. Separatorvorrichtung nach einem der vorstehenden Ansprüche, **dadurch gekennzeichnet, dass** sich vom Zyklondom (9) ausgehend ein Strömungskörper (23, 39) entlang der Längsachse (4) bis zum Endbereich des Entnahmerohres (35) erstreckt.

10. Separatorvorrichtung nach einem der vorstehenden Ansprüche, **dadurch gekennzeichnet, dass** am Ende des Strömungskörpers (39) ein Spaltsieb (55) angeordnet ist, das sich bis in die trichterartige Erweiterung (41) des Entnahmerohres (35) erstreckt.

## Claims

1. A separating device for separating a multiphase medium, comprising a cyclone separating device (1) which causes at least partial distribution of at least two phases of this medium with the formation of a vortex flow for the medium, by means of a collecting device (35, 37) the respective phase, which has a lower density in comparison to the respective other phase, being separated from this other phase and being able to be routed out of the separating device, the collecting device having at least one discharge pipe (35) which discharges with at least one collection opening (37) in the cyclone separating device (1) in a zone in which the phase of lower density is separated by the vortex flow, **characterised in that** contouring (49) is provided on an outside of a wall (45) of the discharge pipe (35).

2. The separating device according to Claim 1, **characterised in that** there is a widening (41) which increases the inlet cross-section of the collection opening (37) at the end of the respective discharge pipe (35).

3. The separating device according to either of the preceding claims, **characterised in that** the widening is formed by a conical intake funnel (41).

4. The separating device according to any of the preceding claims, **characterised in that** the outer edge (43) of the intake funnel (41) projects radially over the wall (45) of the discharge pipe (35).

5. The separating device according to any of the preceding claims, **characterised in that** the intake funnel (41) is formed within the wall thickness of the discharge pipe (35).

6. The separating device according to any of the preceding claims, **characterised in that** in the wall (45) of the discharge pipe openings (47) are formed which lead into the interior of the intake funnel (41).

7. The separating device according to any of the preceding claims, **characterised in that** the contouring is formed by a round brush (49) or a spiral brush.

8. The separating device according to any of the preceding claims, **characterised in that** the cyclone separating device (1) has a cyclone housing (3) which defines a longitudinal axis (4) with a housing inlet (1) for inflow of the multiphase medium into a cyclone dome (9) and a space which adjoins the dome (9) along the longitudinal axis (4) and which has the collecting device (35, 37) for the lower density phase and housing outlets (27, 33) for other phases, and that the discharge pipe (35) extends in the middle along the longitudinal axis (4) within the space.

9. The separating device according to any of the preceding claims, **characterised in that**, proceeding from the cyclone dome (9), a flow body (23, 39) extends along the longitudinal axis (4) as far as the end region of the discharge pipe (35).

10. The separating device according to any of the preceding claims, **characterised in that** on the end of the flow body (39) there is a wedge-wire screen (55) which extends into the funnel-like widening (41) of the discharge pipe (35).

## Revendications

1. Dispositif de séparation pour séparer un milieu à plusieurs phases, comprenant un séparateur (1) cyclonique, qui provoque, en formant un écoulement tourbillonnaire du milieu, une séparation au moins partielle d'au moins deux phases de ce milieu, dans lequel, au moyen d'un dispositif (35, 37) collecteur, la phase, qui a une masse volumique plus petite que l'autre phase, est démixée de cette autre phase et est extraite du dispositif de séparation, le dispositif collecteur ayant au moins un tuyau (35) de prélèvement, qui débouche par au moins une ouverture (37) collectrice dans le séparateur (1) cyclonique dans une zone dans laquelle la phase de masse volumique plus petite est démixée par l'écoulement tourbillonnaire, **caractérisé en ce qu'**une formation de contour (49) est prévue sur une face extérieure d'une paroi (45) du tuyau (35) de prélèvement.

2. Dispositif de séparation suivant la revendication 1, **caractérisé en ce qu'**à l'extrémité du tuyau (35) de prélèvement, est prévu un élargissement (41) agrandissant la section transversale d'entrée de l'ouverture (37) collectrice.

3. Dispositif de séparation suivant l'une des revendications précédentes, **caractérisé en ce que** l'élargissement est formé par un entonnoir (41) d'entrée conique.

4. Dispositif de séparation suivant l'une des revendications précédentes, **caractérisé en ce que** le bord (43) extérieur de l'entonnoir (41) d'entrée dépasse radialement de la paroi (45) du tuyau (35) de prélèvement.

5. Dispositif de séparation suivant l'une des revendications précédentes, **caractérisé en ce que** l'entonnoir (41) d'entrée est formé dans l'épaisseur de paroi du tuyau (35) de prélèvement.

6. Dispositif de séparation suivant l'une des revendications précédentes, **caractérisé en ce que**, dans la paroi (45) du tuyau (35) de prélèvement, sont formées des ouvertures (47), qui conduisent à l'intérieur de l'entonnoir (41) d'entrée.

7. Dispositif de séparation suivant l'une des revendications précédentes, **caractérisé en ce que** la formation du contour est formé par une brosse (49) circulaire ou par une brosse en spirale.

8. Dispositif de séparation suivant l'une des revendications précédentes, **caractérisé en ce que** le séparateur (1) cyclonique a une enveloppe (3) de cyclone, définissant un axe (4) longitudinal et ayant une entrée (11) d'enveloppe pour l'entrée du milieu à plusieurs phases dans un dôme (9) de cyclone et, se raccordant au dôme (9) le long de l'axe (4) longitudinal, un espace qui a le dispositif (35, 37) collecteur de la phase de masse volumique plus petite ainsi que des sorties (27, 33) d'enveloppe pour d'autres phases et **en ce que** le tuyau (35) de prélèvement s'étend au milieu, à l'intérieur de l'espace, le long de l'axe (4) longitudinal.

9. Dispositif de séparation suivant l'une des revendications précédentes, **caractérisé en ce qu'**un corps (23, 39) d'écoulement s'étend le long de l'axe (4) longitudinal, à partir du dôme (9) du cyclone jusqu'à la partie d'extrémité du tuyau (35) de prélèvement.

10. Dispositif de séparation suivant l'une des revendications précédentes, **caractérisé en ce qu'**à l'extrémité du corps (39) d'écoulement est disposé un tamis (55) à fentes, qui s'étend jusque dans l'élargissement (41) en forme d'entonnoir du tuyau (35) de prélèvement.
